# EUROPEAN PATENT APPLICATION

(11) **EP 4 806 303 A1**
(43) Date of publication of application: **16.09.2026**
(21) Application number: 26164420.7
(22) Date of filing: 12.03.2026
(51) Int. Cl.: A47F 1/06, A47F 5/11

(54) **DISPLAY STAND**

(30) Priority: 12.03.2025 PL 45145525
(71) Applicant: POS Lab International Sp. z o.o. Sp. j., 05-805 Otrebusy (PL)
(72) Inventor: RADZKI, Wojciech, 05-074 Kazimierów (PL)
(74) Representative: LDS Lazewski Depo & Partners

(57) **Abstract**

The invention relates to a display stand for storing products arranged in a stack. The lightweight and durable, modular design of the stand, according to the invention, allows for easy transport in either the folded or unfolded state (e.g., within a point of sale) and simple assembly and disassembly without the need for specialized tools. The display stand allows for optimal presentation of products of various sizes and weights by keeping them at an ergonomically adjusted height, i.e., within easy reach. The display stand is primarily made of recyclable cardboard materials, suitable for reprocessing.

## Description

### Field of the invention

The present invention relates to a display stand for storing products arranged in a stack.

### Background

Display stands are part of the Point of Sales (POS) system, including sales-promoting materials at the point of purchase. POS materials can be divided into several categories, a common practice in retail marketing and the visual product display industry. This division stems from practical aspects of use and the standards applied in retail.

The first operative classification concerns the durability of sales-stimulating materials. Within its framework, one can distinguish between temporary (short-term) materials, used for short promotional campaigns and made of lightweight and less durable materials such as paper or cardboard, and permanent (long-term) materials, made of sturdy materials and used for longer-term displays. Display stands can fall into both categories of materials, with the present display stand being a temporary material.

The second important division concerns the location at the point of sale. Among POS materials, one can distinguish first-placement materials, i.e., those placed directly on shelves in a typical location appropriate for the relevant product, such as wobblers, price strips, or trays. Another group consists of secondary placement materials, which are placed outside standard display shelves to showcase the product throughout the store. Display stands fall into the second of said groups because they are placed in store aisles or next to display shelves.

Another classification of POS materials distinguishes between visual advertising, which aims to attract customers' attention and inform them about promotions or new products, and product displays, which present products and facilitate access to them. Display stands belong to the second group, as they allow products to be displayed outside standard store display shelves, creating additional sales space.

There are many types of display stands available on the market, manufactured by various producers.

U.S. Patent US11903496B2 discloses a point-of-purchase product display stand comprising an elongate housing that defines an interior volume, to which springs are coupled to support a movable platform configured to hold and display vertically-stacked products. In one embodiment, four springs are utilized, positioned on opposite walls of the housing. In another embodiment, two springs are utilized, which are attached on one side to an element supporting the movable platform and on the other side to mounting elements located on the upper portions of the walls and the upper portions of the inner walls. The said inner walls include vertical stabilizing slots in which the tabs of the platform support move. In this embodiment, the springs also extend along the opposite walls of the stand housing. The stand housing consists of four walls and is stabilized by a base. The housing may be made of durable materials, such as plastic, wood, or metal. As other products are placed on the platform, the platform is pushed deeper into the internal volume of the stand, and the springs attached to it are tensioned to a degree that allows the top layer of products to be displayed. When the top layer of products is removed, the platform automatically rises, exposing the next layer of merchandise. The patent does not disclose that the stand or its components may be made of cardboard material.

International patent application WO1999032018A1 discloses a storage and dispensing device for products of predetermined shape and weight, comprising a tubular housing having an access opening in an outer or upper region thereof, a support platform movable within the housing between first and second stop positions and spring means biassing the platform toward said first stop position. According to the invention, a single helical compression spring may be used, located between the underside of the platform and the closed bottom of the housing, or a plurality of helical compression springs, generally in coaxial alignment, with a plate spanning. The device stores stacked articles, wherein the top or outer layer of the article stack is accessible to the user for unloading. The application does not disclose the material from which the storage device may be made.

U.S. Patent Application US20040178157A1 discloses a display rack which can automatically replenish the products in the front of the rack. When the outer layer of products is removed, an auto-tracking system immediately pulls the products forward, thus leaving no blank space in the front of the rack. The rack may be made of any material, such as cardboard or paperboard, while the auto-tracking system can be made of any elastic material, such as a rubber band. The application does not disclose any mechanism for displaying and dispensing products using a movable platform mounted on springs.

German utility model DE20304158U1 discloses a display and dispenser unit for compact discs. The unit consists of a folded outer body, a folded inner body, and a dispensing module seated on the inner body. The dispensing module includes a platform that moves within a channel of the dispensing module by springs arranged laterally on the dispensing module. A stack of compact discs is placed on the platform and automatically pushed toward the top of the device, where the top layer of the stack is displayed and accessible to a user. The outer body and inner body are made of cardboard, while the dispensing module is made of plastic.

Therefore, a need exists for providing an improved display stand with a lightweight and durable structure that allows easy transport in either the folded or unfolded form (e.g., within a point of sale) and simple assembly and disassembly without specialized tools. Wherein, the display stand should be an eco-friendly solution that minimizes waste and meets the requirements of sustainable development.

### Summary of the invention

The present invention relates to a display stand for storing products arranged in a stack, comprising
an elongated body comprising a housing, and two support columns located opposite each other inside the housing and attached thereto,
a shelf comprising
   a reinforcing element having four brackets,
   at least four springs, the first ends of which are engaged on the brackets of the reinforcing element, and
two support bars, wherein the second ends of the springs are engaged on the support bars, characterized in that
   the support columns are cuboid in shape and comprise a front wall, a rear wall, a bottom wall, a top wall, and two side walls,
   wherein each support column comprises vertical cutouts located in the upper portion of the side walls,
   the stand further comprises two supplementary columns having a cuboid shape and comprising a front wall, a rear wall, a bottom wall, a top wall, and two side walls,
   wherein the supplementary columns are located opposite each other inside the housing, perpendicular to the support columns, such that the side walls of the supplementary columns are adjacent to the side walls of the support columns, forming corner spaces, wherein the supplementary columns are attached to the housing,
   wherein the front walls of the support columns and the supplementary columns define the interior space of the housing,
   the shelf has a cuboid shape and comprises a top wall and four side walls and, optionally, a bottom, wherein the vertical edges formed by the side walls are at least partially cut out to form slots,
   the reinforcing element is located inside the shelf such that the brackets protrude beyond the shelf through the slots,
   springs are arranged along the vertical edges formed by the side walls of the shelf, where the first end of each spring is engaged on a bracket,
   support bars are positioned in the cutouts of the opposite support columns,
   the shelf is located within the interior space of the housing in such a manner that the brackets and springs are located, respectively, in the corner spaces between adjacent support columns and supplementary columns,
   wherein all elements of the stand, except the springs, are made of cardboard material.

Preferably, the cardboard material is selected from the group comprising cardboard, corrugated cardboard, high-grammage corrugated cardboard, solid cardboard, high-grammage solid cardboard, paper-based honeycomb board, a panel comprising two layers of cardboard joined by a paper core, and a material based on paper tubes or paper tubes.

Preferably, the stand is made of recycled materials.

Preferably, the spring is an adjustable-tension spring.

Preferably, the spring is selected from a group comprising a tension spring, a flat tension spring, and/or a flat tension spring, a flat ring spring, a flat coil spring, and/or a compression spring.

Preferably, the spring is a spring assembly comprising at least two springs.

Preferably, at least one supplementary column in the lower part comprises at least one locking element extending into the interior space of the housing.

Preferably, the support columns and/or supplementary columns are attached to the housing through a slide-in closure.

Preferably, the support columns and/or supplementary columns are glued, screwed, or sewn to the housing walls.

Preferably, the brackets are positioned at the bottom of the reinforcing element.

Preferably, the springs are engaged at one end to holes made in the brackets and at the other end to holes made in the support bars.

Preferably, the support column comprises stabilizing elements located below the cutouts in the side wall.

Preferably, the stabilizing elements are located in the side wall of the support columns directly below the cutouts.

Preferably, the stand additionally includes a replaceable sleeve positioned on the outer surface of the housing.

Preferably, the stand additionally includes a graphic panel located in the upper part of the housing.

Preferably, the graphic panel is located in cutouts in the upper part of the housing.

Preferably, the graphic panel is stabilized by notches, additional holes, screws, adhesive, or double-sided tape.

Preferably, at least one locking element and/or stabilizing elements and/or the sleeve and/or the graphic panel is made of cardboard material.

### Advantages of the present invention

An advantage of the display stand over prior-art solutions is its modular design and lightweight yet durable construction, which allows repeated folding and unfolding. The display stand can be assembled at the final display location, e.g., in a store, and disassembled and stored for transport, occupying a small amount of space in its disassembled state. Assembling the display stand requires no tools or specialized technical knowledge, making it an economical and user-friendly solution.

Furthermore, the display stand is primarily made of cardboard materials, which can be recycled and are suitable for reprocessing. Consequently, the display stand is made of inexpensive and eco-friendly materials, and its use does not generate harmful, hard-to-dispose-of waste. The use of such material significantly reduces the stand's weight, making it easier to handle - folding, unfolding, moving, etc.

Another advantage of the display stand is that it allows for the optimal presentation of products of various sizes and weights by keeping them at an ergonomically adjusted height, within arm's reach. The user can easily access the product without bending down.

### Description of the Figures

The subject matter of the invention in the embodiments is illustrated in the drawings, in which:
Fig. 1 shows a perspective view of the shelf, support bars, and the body of the display stand partially assembled.
Fig. 2 shows a perspective view of the body of Fig. 1
Fig. 3 shows a perspective view of the support column in partial cross-section.
Fig. 4 shows an enlarged cross-sectional detail of Fig. 3.
Fig. 5 shows a perspective view of the supplementary column.
Fig. 6 shows a perspective view of the shelf of Fig. 1, unfolded.
Fig. 7 shows a perspective view of the shelf and support bars of Fig. 1.
Fig. 8 shows a side view of the shelf and support bars of Fig. 1.
Fig. 9 shows a perspective view of the supplementary columns and support columns in their assembled state.
Fig. 10 shows a cross-section of the body of Fig. 1 as viewed from above.
Fig. 11 shows a perspective view of a partial cross-section of the display stand in its assembled state, with products not fully loaded.
Fig. 12 shows a perspective view of a partial cross-section of the display stand in its assembled state, fully loaded with products.
Fig. 13 shows a perspective view of the display stand of Fig. 1 in its folded state, along with the graphic panel before folding.
Fig. 14 shows an enlarged perspective view of a detail of the display stand of Fig. 13.
Fig. 15 shows a perspective view of the display stand with the graphic panel inserted into the stand housing.

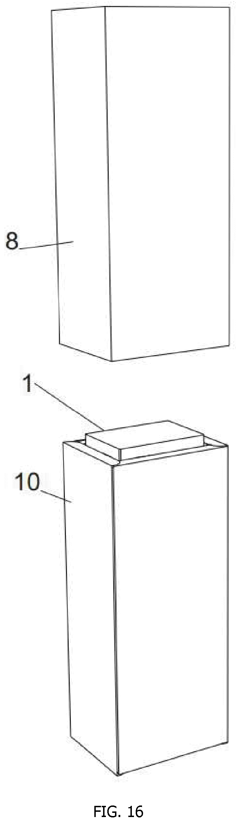

Fig. 16 shows a perspective view of the display stand in its assembled state and the sleeve before assembly.

### Detailed description of the invention

The subject matter of the invention is a modular display stand for storing products arranged in a stack, which, apart from the springs, is made of cardboard material. The stand structure makes it both lightweight and durable, and its operation is easy and does not require specialized tools.

The modularity of the display stand according to the invention is manifested in the fact that its components, including, *inter alia,* the shelf, springs, support bars, support columns, reinforcing element, supplementary columns, the housing, as well as the sleeve and graphic panel, are separate structural elements that, when assembled, form a display stand. In the event of damage or wear to a component, it can be replaced without disposing of the entire stand.

### Definitions

According to the invention, the term "blank" refers to a semi-finished product made of cardboard material from which, by assembly using connecting/fastening elements, the three-dimensional elements of the display stand according to the invention are formed, e.g., rectangular columns, a shelf, etc.

According to the invention, the term "cuboid shape" means that a given element of the display stand has the form of a mathematical solid-a cuboid, i.e., one in which adjacent walls are at right angles (90°). According to the invention, a cuboid element need not include all the walls of the solid.

The term "cardboard material" should be understood to mean any material made from cardboard, paperboard, or paper. Cardboard material may have any structure known in the prior art, including single-layer, multi-layer, glued, or corrugated structures. Preferably, the cardboard material consists of cardboard, corrugated cardboard, high-grammage corrugated cardboard, solid cardboard, high-grammage solid cardboard, paper-based honeycomb board, a panel comprising two layers of cardboard joined by a paper core (Re-board^{®} panel), and a material based on paper pipes or paper tubes.

According to the invention, a particularly suitable cardboard material may be five-layer corrugated cardboard, e.g., of the 5wEE type. Such material may be unfinished or finished; for example, it may be bleached, gray, or laminated-on both sides or on one side. In other embodiments, five-layer corrugated cardboard of the 5BE, 5BC, 5BB, or 5CC type may also be used, or five-layer corrugated cardboard, e.g., of the 3B or 3E type. In embodiments relating to display stands used with light loads, according to the invention, paper-based materials (cardboard) may also be used, for example, with grammages of 315 g to 460 g.

The selection of the grammage of the cardboard materials used in accordance with the invention depends on the weight of the products for which the display stand structure is intended. A preferred range of grammages in accordance with the invention is from 250 g/m² to 1500 g/m².

The use of cardboard material for manufacturing all structural elements, except springs, rather than materials used in the prior art, such as plastic, metal, or wood, ensures the lightness and mobility of the entire structure, as well as low production costs.

The use of cardboard material allows for the formation of any details within its structure, including details enabling folding and unfolding, such as bends, flaps, latches, slots, cutouts, holes, tabs, and other details known in the prior art, which enable the shaping and easy folding and unfolding of both individual structural elements and the entire display stand structure. In particular, selected structural elements, such as a shelf, support bars, support columns, a reinforcing element, supplementary columns, a housing, a sleeve, or a graphic panel, may be adapted for folding and unfolding during construction and may include details enabling folding and unfolding.

Individual structural elements may be equipped with any connecting/fastening means known in the prior art, adapted to the function of the given structural element. The term "connecting/fastening means" refers to means intended to fix, fasten, connect, or ensure the stability of an individual structural element or its part relative to another structural element or its part. Structural elements made of cardboard material may include any connection or closure known in the prior art, such as latches, locks, magnetic elements, inserts, folds, or tabs.

Structural elements made of cardboard material may, in particular, include connecting/fastening elements known in the prior art, enabling mutual connection and disconnection. Preferably, structural elements made of cardboard material may include slide-in closure elements, such as cutouts, slots, openings, and tabs.

### Structure of the display stand

### Stand body

The main component of the display stand is an elongated body, which defines its shape and the volume of the interior space where products are stacked. According to the invention, the body comprises a housing and support and supplementary columns located inside it.

The housing is the outer element of the elongated body and ensures both the stability of the structure and a uniform appearance of the display stand from the outside. It is essential for maintaining the stand's vertical position and for properly arranging the support and supplementary columns. The thickness of the housing can be freely adjusted, for example, by the type of cardboard material used to make it or the number of its layers.

The internal components of the display stand, according to the invention, are mainly columns-supporting and supplementary -and a shelf.

### support columns

The display stand housing comprises two support columns, positioned opposite each other along the side walls of the housing. The support columns are cuboidal and assembled from a suitable cardboard blank. After assembling the blank using any connecting/fastening elements known in the prior art, a rectangular column is formed, comprising a front wall, a rear wall, a top wall, a bottom wall, and two side walls. When support columns are placed inside the housing, their rear walls face the inner surfaces of the housing walls and, preferably, contact them.

The dimensions of the blank from which the support columns are manufactured can be adjusted by a skilled person based, *inter alia,* on the dimensions of the housing, the dimensions of the shelf, the type and model of springs used, the type of merchandise to be placed on the shelf, or the material used to manufacture the individual components of the display stand, etc.

Thanks to their cuboid structure, the support columns provide the display stand with the strength it needs, which is essential for a structure made of cardboard material.

Preferably, the support columns include profiled bends that mark the location of the edges of the support column walls.

In the upper parts of the side walls, the support columns include vertical cutouts for inserting support bars (described in detail below). The use of vertical cutouts in the upper part of the side walls allows for easy shelf installation by inserting support bars into them. The specific location of the cutouts, as well as their width and length, may be adjusted by a skilled person based, *inter alia,* on the dimensions of the support bars, the dimensions of the shelf, the type and model of springs used, the type of merchandise to be placed on the shelf, or the material used to manufacture the individual components of the stand, etc.

In an advantageous embodiment, the support columns include stabilizing elements on their side walls, positioned below the aforementioned vertical cutouts.

In an advantageous embodiment, the stabilizing elements are positioned directly below the vertical cutouts in the side walls of the support columns. The stabilizing elements may be positioned on the side walls of the support columns-on either their inner or outer surfaces. Preferably, however, they are positioned on the inner surface of the side walls.

The role of the stabilizing elements is to protect the cutouts and the entire support columns from destruction or damage caused by the weight of products placed on the stand shelf. The stabilizing elements reinforce the side walls, preventing the support bar from cutting into the support columns' side walls. The stabilizing elements prevent the cardboard material from tearing in the part of the support column most vulnerable to damage, thereby allowing heavier merchandise to be stored.

The need to use stabilizing elements depends primarily on the material from which the stand components are made, especially the support columns, as well as the type and, in particular, the weight of the products intended to be placed on the stand shelf. Consequently, in certain embodiments in which the stand components, particularly the support columns, are made of high-rigidity, high-strength materials, such as solid cardboard, stabilizing elements will not be necessary. Based on the stand's parameters, a skilled person can determine whether stabilizing elements are necessary and select their size and location.

### Supplementary columns

In addition to the support columns, the stand housing of the invention includes two supplementary columns positioned opposite each other along the side walls of the stand housing. The supplementary columns are cuboidal in shape and are assembled from a suitable cardboard blank. After assembling the blank using any connecting/fastening elements known in the prior art, a rectangular column is formed comprising a front wall, a rear wall, a top wall, a bottom wall, and two side walls. After placing the supplementary columns in the housing, their rear walls face the inner surfaces of the housing walls and, preferably, are in contact with them.

The supplementary columns are placed in the stand housing perpendicular to the support columns such that the side walls of the supplementary columns adjoin the side walls of the support columns, forming spaces located at the inner corners of the stand housing (corner spaces), in which the reinforcing element's brackets and springs move, respectively. As with the support columns, the supplementary columns are attached to the housing.

The supplementary columns also serve as fillers, increasing the base area of the body in contact with the ground, thereby helping the display stand maintain stability despite its relatively small dimensions and making it more difficult to tip over. Additionally, in certain embodiments, the supplementary columns may serve as locations for placing additional springs, for example, when necessary due to the size and weight of the displayed products.

The dimensions of the blank from which the support columns are manufactured can be adjusted by a skilled person based, *inter alia,* on the dimensions of the housing, the dimensions of the shelf, the type and model of springs used, the type of merchandise to be placed on the shelf, or the material used to manufacture the individual components of the display stand, as well as depending on the specific design of the display stand.

### Attaching columns to the housing

Supportand supplementary columns may be attached to the walls of the display stand housing in any manner known to a person skilled in the art that allows for the joining of cardboard materials.

In one advantageous embodiment, the columns are attached to the housing using a slide-in closure. For this purpose, the blanks from which the columns are made include at least one appropriate cutout-for example, one, two, three, or more cutouts-which, after assembling the column blanks, will be located in the upper and lower parts of the column, respectively, such as along the joint line between the top wall of the column and its front wall. The number of cutouts will depend, *inter alia,* on the dimensions of the stand housing and columns, the material used to manufacture the individual stand components, particularly the housing, support columns, and supplementary columns, and may be selected by a person skilled in the art. In an advantageous embodiment, each of the support and supplementary columns includes two cutouts along the line where the upper and lower walls meet the column's front wall.

At least one cutout serves to secure the column to the housing by inserting into it at least one projection, for example, one, two, three, or more projections, with which the housing tabs, which are extensions of the housing walls located at the upper and lower edges of the housing walls, respectively, are equipped.

In another embodiment, the support and/or supplementary columns may be glued, screwed, or sewn to the housing walls in a manner known to a skilled person.

### Locking elements

According to the invention, the stand need not include any elements blocking the downward movement of the shelf-in such a case, the surface on which the stand is placed provides the lock. However, in one embodiment, at least one supplementary column includes at least one locking element extending into the interior space of the housing. In one embodiment, at least one supplementary column includes two locking elements. In yet another embodiment, one locking element is located on both supplementary columns. In a particularly advantageous embodiment, at least one locking element is formed by two opposing projections cut from the front wall of the supplementary column and bent perpendicularly thereto into the interior space of the housing. In yet another embodiment, the locking elements are attached by any means known to a skilled person to at least one supplementary column.

In yet another embodiment, at least one locking element is positioned on at least one support column, wherein, in this embodiment, the display stand is preferably designed to store lightweight products.

Alternatively, the locking element may also be a separate component, not connected to the display stand, placed on the base on which the stand is set.

The locking element determines the maximum lowering level of the shelf (thereby determining the volume of the internal space that can be filled with products), thereby protecting the springs from excessive strain. The element should be constructed to keep the shelf in a horizontal plane. The sizes, number, and placement of the locking elements can be easily selected by a skilled person based, *inter alia,* on the dimensions of the stand housing, the dimensions of the shelf, the type and model of springs used, the type and quantity of merchandise to be placed on the shelf, and the material used to manufacture the individual stand components.

### Shelf

The shelf is a structural element of the display stand according to the invention, on which the products stored in the display stand are placed. The shelf has a cuboid shape and is assembled from a corresponding cardboard material blank. After assembling the blank, a cuboid shelf is formed, comprising a top surface for placing products, and four side walls. The edges formed by the side walls are at least partially cut out to form slots. In one embodiment, these slots extend along the entire length of the aforementioned edges. In yet another embodiment, the size of the slots is generally adapted to the dimensions of the reinforcing element's brackets, described below. The slots in the shelf may also be formed by not joining the edges of the side walls together during the assembly of the shelf blank.

The dimensions of the blank from which the shelf is made may be adjusted by a skilled person depending on, *inter alia,* the dimensions of the housing, the dimensions of the shelf, the type and kind of springs used, the type of merchandise to be placed on the shelf, or the material used to manufacture the individual components of the stand, etc.

In one embodiment, the shelf additionally includes a bottom.

The blank from which the shelf is made may advantageously include elements for connecting the side walls to each other and/or to the bottom, if present, to form a solid structure. The type, number, and location of the connecting/fastening elements can be easily selected by a skilled person based, among other factors, on the dimensions of the shelf and the material from which it is made.

The cuboid shape of the shelf provides greater stability and strength, which are essential for a cardboard structure, and also prevents the shelf from getting stuck between the columns. The cuboid shape of the shelf constitutes a structural improvement over flat shelves reinforced from below, as known in the prior art, which can jam during movement within the stand. The cuboid shape of the shelf also allows gaps to form between the side walls at its edges. The shelf structure also allows for controlling the height at which the first layer of displayed products is extended. The shelf's dimensions can be adjusted to fit the packaging to be stored in a given display stand. Preferably, the shelf has contoured bends that mark the location of its side edges.

A reinforcing element is placed inside the shelf, ensuring proper load distribution across the shelf and providing additional stabilization and reinforcement of its structure, thereby preventing deformation, for example, caused by long-term product storage. The reinforcing element may have any form capable of fulfilling the functions indicated above.

According to the invention, the reinforcing element is located within the internal space of the shelf. Preferably, the reinforcing element is not permanently attached to the shelf, allowing it to be easily replaced if damaged. In another embodiment, the reinforcing element is permanently or detachably attached to the shelf in any manner that allows for the joining of cardboard materials. In one embodiment, the reinforcing element has a solid construction, meaning it is made from a single piece of cardboard material. In another embodiment, the reinforcing element is formed from at least two segments-for example, two, three, four, or more segments-preferably connected to one another permanently or detachably. In one advantageous embodiment, the reinforcing element is formed from four segments. The method and type of connection between the segments of the reinforcing element may be selected by a person skilled in the art based on, *inter alia,* the dimensions of the shelf, the material from which the shelf and the reinforcing element are made, the type of products to be stored on the shelf, etc. The detachable connection between the segments of the reinforcing element may, for example, be achieved by means of cutouts in the segments of the reinforcing element, allowing these segments to be slid together to form a rigid structure.

According to the invention, the reinforcing element comprises four brackets that extend beyond the shelf structure through slots formed at the edges by the shelf's side walls. The brackets attach the shelf to the body of the display stand, enabling it to move by engaging the first ends of the springs. The position of the brackets along the height of the shelf can be adjusted depending on the height of the product and is preferably adjusted by positioning (cutting out) the brackets in the appropriate place on the reinforcing element. Preferably, the brackets are located in the lower part of the reinforcing element, i.e., in the part that is closer to the bottom of the shelf after the reinforcing element is placed inside it.

The springs may be attached to the reinforcing element's brackets by any method known to a skilled person; in an advantageous embodiment, the brackets include holes into which the first ends of the springs are engaged.

### Springs

The springs constitute a structural element of the display stand according to the invention, enabling the shelf to move within the stand's housing. The springs maintain the shelf at an appropriate height, allowing the top layer of the product stack to be displayed in the upper part of the display stand.

According to the invention, the springs are arranged along the vertical edges formed by the side walls of the shelf, wherein, as indicated above, the first end of each spring is attached to the bracket of the shelf reinforcing element. The other end of each spring is attached to a support bar, as described in more detail below.

The arrangement of the springs along the edges of the shelf's side walls provides the advantage of efficient material utilization as well as simplicity and quick assembly during manufacturing or user installation. Furthermore, this spring arrangement allows better control of shelf tilt under uneven loading.

Depending on the embodiment, the appropriate spring type and length are selected based on the weight and dimensions of the product to be stored on the display stand. Depending on the variant embodiment, the springs may be made of metal or a metal alloy known in the prior art, enabling the spring to function properly in the described application. Preferably, the springs are made of steel. Preferably, the spring is an adjustable-tension spring. Preferably, the spring used in the stand according to the invention may be of any type, but more preferably, the spring is selected from the group of springs that includes tension springs, flat tension springs, flat ring springs, flat coil springs, and compression springs. In a particularly advantageous embodiment, tension springs are used.

Alternatively, at least one spring may be replaced by a spring assembly comprising at least two springs, for example, two, three, or more springs, extending along the edge formed by the side walls of the shelf. In this embodiment, the spring set is mounted in the same manner as a single spring, i.e., the first ends of at least two springs comprising the set are engaged onto the brackets, and their second ends are engaged onto the ends of the support bars. In this embodiment, the brackets of the reinforcing element may have a number of holes corresponding to the number of springs in the set. Alternatively, all springs in the set may be engaged onto the same hole in the bracket of the reinforcing element.

### Support bars

Support bars are structural elements of the stand according to the invention that serve as a second attachment point for the second ends of the shelf springs, allowing the shelf to move within the stand housing. The support bars are fixedly positioned in vertical slots formed in the upper portions of the support columns.

The support bars may have any shape that fulfills both of the aforementioned functions. Preferably, the support bars are in the form of strips made of cardboard material. Preferably, the support bars are made of solid cardboard.

The springs may be attached to the support bars by any method known to a skilled person. Preferably, the second ends of the springs are attached to the ends of the support bars. In a particularly advantageous embodiment, the support bars include holes, preferably located at their ends, into which the second ends of the springs are engaged. Preferably, a hole for attaching the second end of one of the springs is provided at each end of the support bars. In an embodiment in which assemblies containing two or more springs are used instead of individual springs, the support bars may have a number of holes at each end, corresponding to the number of springs in the set. Alternatively, all springs in the set may be engaged into a single hole at the end of the support bar.

### Graphic panel

The graphic panel is an optional component of the display stand according to the invention, used to present information, e.g., related to the products placed on the stand. The graphic panel allows the display stand to be visually adapted to the product being presented at any given time, enabling a single display stand to be used in multiple consecutive promotional campaigns.

The graphic panel may have any form, shape, or size. The graphic panel may be made of any material, though it is preferably made of cardboard material. The graphic panel is preferably detachably mounted to the upper part of the stand housing. For this purpose, appropriate fastening elements known in the prior art may be provided in the upper part of the stand housing. In one embodiment, the upper part of the housing includes cutouts into which tabs formed in the graphic panel are inserted. In other embodiments, the graphic panel may be stabilized using notches, additional slots, screws, adhesive, or double-sided tape, etc.

Preferably, the housing has contoured bends that mark the location of the side edges of the elongated body.

### Sleeve

A replaceable sleeve is another optional structural element of the stand according to the invention. The sleeve may be located on the outer surface of the housing and, if necessary, attached to it by any means known in the prior art. In an advantageous embodiment, the sleeve is slid over the housing of the stand according to the invention. The sleeve may be made of any material; preferably, the sleeve is made of cardboard material. The sleeve serves as a graphic element, enabling the visual adaptation of the display stand to the product currently being presented, thereby allowing a single display stand to be used in multiple successive promotional campaigns.

In one embodiment, to obtain the assembled state of the display stand-that is, the form ready for use-the support and supplementary columns are assembled from appropriate blanks, placed inside the stand's housing, and attached to its walls. A shelf is assembled from a corresponding blank, and a reinforcing element is placed inside it so that its brackets protrude beyond the shelf. The first end of one of the springs is engaged onto each bracket of the reinforcing element, while the second ends of the spring pairs are engaged onto the support bars. The support bars are then secured in the vertical slots of the support columns, and the shelf is inserted into the interior space of the stand housing in such a way that the springs are positioned in the corner spaces between the side walls of the support and supplementary columns.

This spring arrangement prevents potential jamming when moving the shelf and provides additional stabilization through the housing walls and columns. Additionally, long springs can be used in the display stand. In this way, the shelf is positioned in a movable manner within the interior space of the housing, allowing it to be moved vertically relative to the body of the display stand.

### The operating mechanism of the stand

When unfolded, the display stand is placed on any surface capable of maintaining a vertical position, with the display stand in direct contact with said surface via the lower walls of the support and supplementary columns and the lower edge of the housing. Preferably, the stand is placed on the floor, another flat surface, or the ground.

The display stand is loaded by placing the first layer of products on the shelf, which is initially located at the top of the stand's body. Subsequent layers of products are added by placing them on top of the existing layer on the shelf, thereby creating a stack of products placed one on top of the other. As subsequent layers of products are loaded, under the influence of gravity, the shelf lowers into the interior space of the display stand's housing, simultaneously stretching the springs. Loading of products is possible until the lower part of the shelf comes into contact with the locking element, the floor, or another flat surface or ground. During loading, regardless of the number of products in the display stand at any given time, the top layer of the stacked products is always displayed at the top of the stand's body or above the top of the stand's body. The display height of the merchandise is determined by the cuboid shelf's design, specifically the height of its side walls.

Unloading the display stand involves removing the top, exposed layer of products, stacked in a pile, or the portion of products constituting the top layer. When a product is removed, the pressure on the shelf from the remaining products decreases, causing the springs holding the shelf to compress and, in turn, the shelf to rise within the interior space of the housing. Consequently, in place of the removed layer of products, the next layer of the product stack extends to exactly the same height. If part of the top layer of products is removed, the next layer of the product stack extends to a proportionally lower height. The process of removing subsequent layers of products is repeated until the display stand is completely emptied. During unloading, regardless of the number of products on the display stand at any given time, the top layer of the stacked products is always displayed at the top of the stand body or above the top of the stand body.

According to the invention, the display stand may be used individually as a standalone display unit. Alternatively, the stands of the invention may be grouped into assemblies comprising two or more stands arranged side by side as independent units, connected by housings and inserted partitions.

### Examples

### Example 1

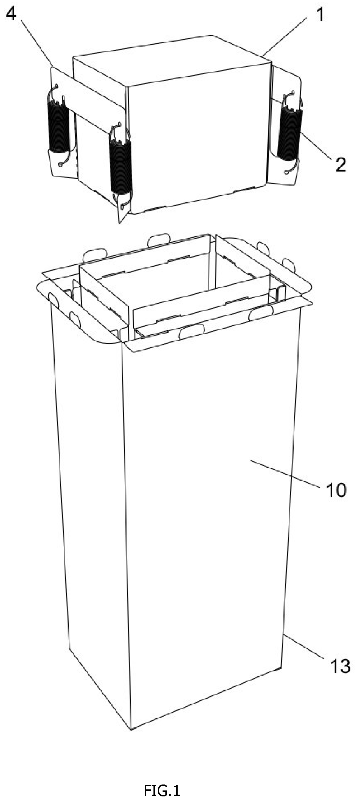

The first embodiment of the display stand according to the invention is shown in Fig. 1-12. In this embodiment, all components except for the springs are made of five-layer corrugated cardboard of the 5wEE type. Tension springs made of steel are used.

The display stand in Fig. 1 is shown in a partially assembled state, just before shelf 1 is placed in the stand's housing 10.

The display stand comprises a longitudinal body 13 containing housing 10, a shelf 1 equipped with springs 2, and two support bars 4 extending along the opposite side walls of shelf 2.

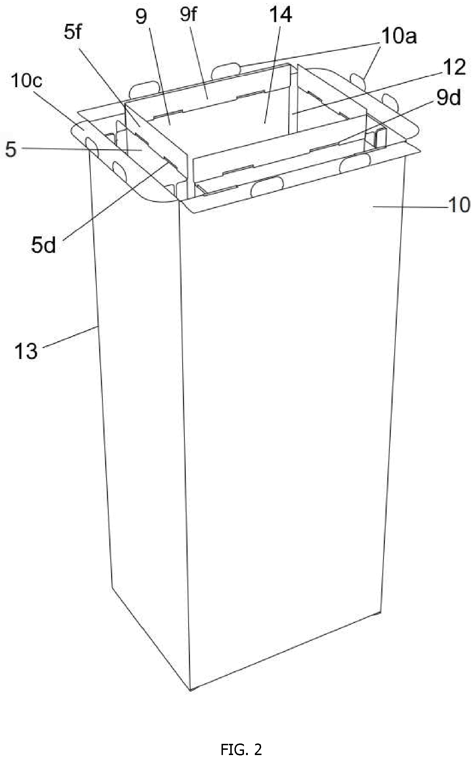

As shown in Fig. 2, the stand housing 10 contains two support columns 5 and two supplementary columns 9, arranged opposite each other and in contact with the inner walls of the stand housing 10.

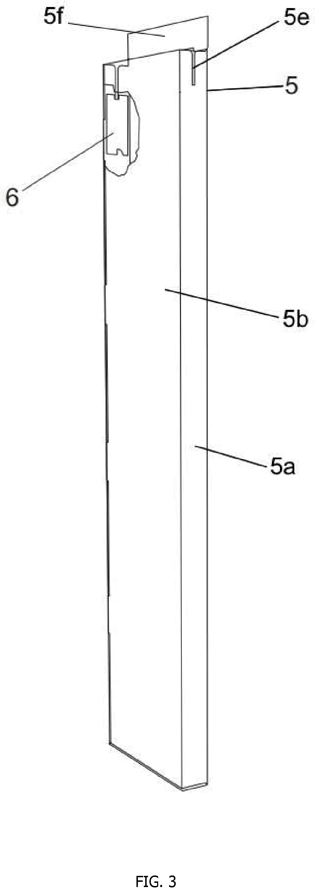

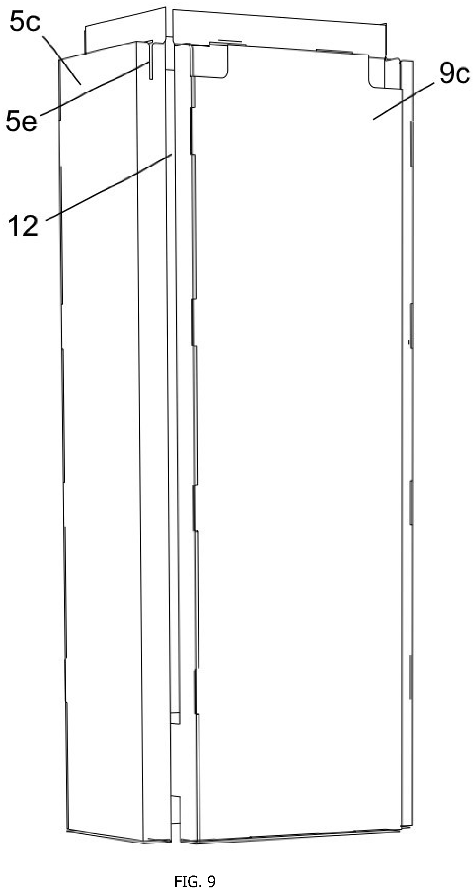

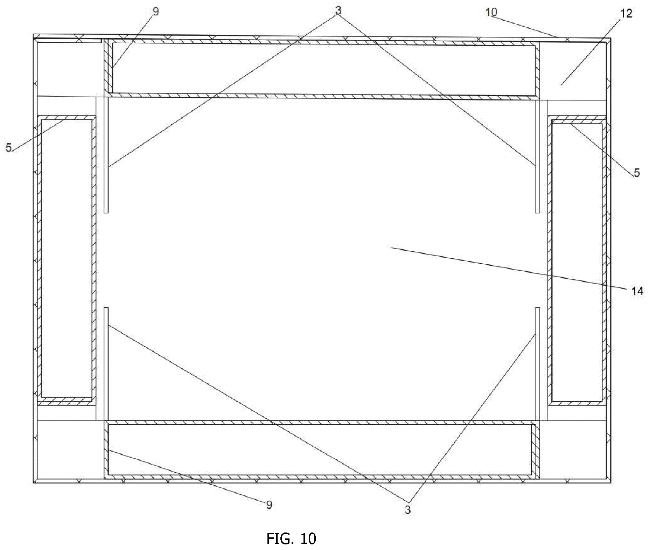

Fig. 3 shows one of the support columns 5, comprising two side walls 5a, a front wall 5b, a rear wall 5c (visible in Fig. 9 and 10), and a top wall 5f, wherein, when the stand is assembled, the rear wall 5c of each support column 5 contacts the surface of the housing walls 10. Each support column 5 includes vertical cutouts 5e located in the upper portion of the side walls 5a.

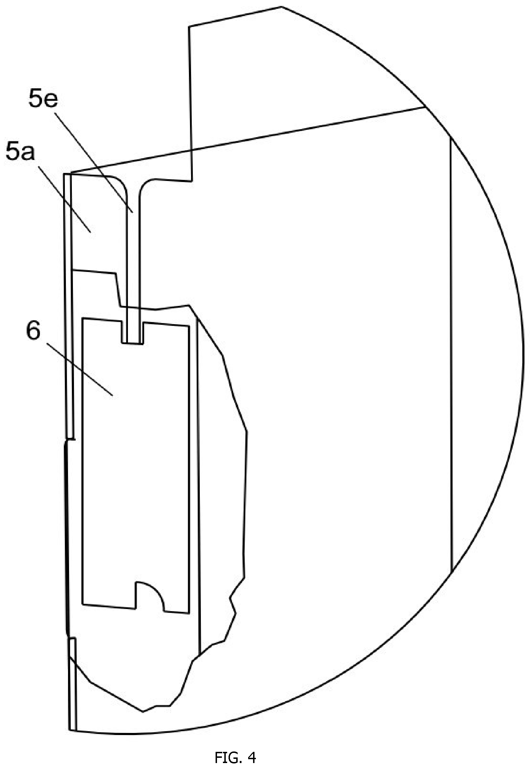

As shown in Fig. 3 and in the close-up in Fig. 4, the support columns 5 include stabilizing elements 6 located directly below the cutouts 5e on the inner surface of the side walls 5e.

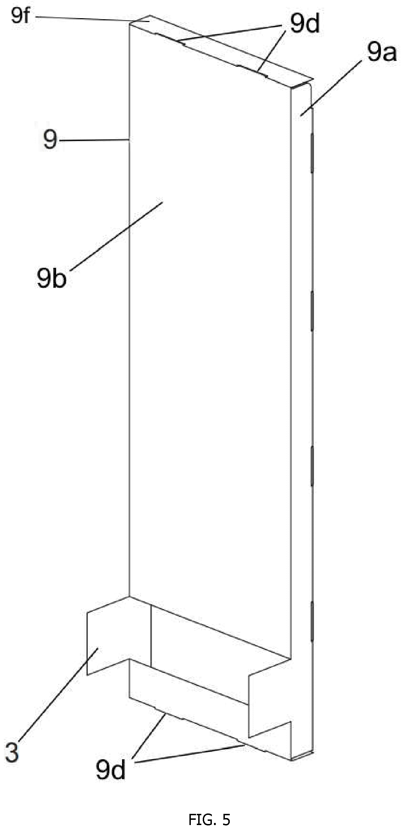

Fig. 5 shows one of the supplementary columns 9. The supplementary columns 9 include two side walls 9a, a front wall 9b, a rear wall 9c (visible in Fig. 9 and 10), and a top wall 9f. The rear wall 9c abuts against the housing 10. As shown in Figs. 1 and 2, and below in Figs. 9 and 10, the supplementary columns are positioned opposite each other inside the housing 10, perpendicular to the support columns 5, such that the side walls 9a of the columns form corner spaces 12 with the side walls 5a of the support columns 5.

Fig. 5 also shows locking elements 3, which are cut-out sections of the front wall 9b of the supplementary column, bent at a right angle toward the interior space of the display stand housing.

Returning to Fig. 2, the support columns 5 and supplementary columns 9 are attached to the housing 10 by means of a slide-in closure by inserting the projections 10a, located on the tabs 10c of the housing 10, into the cutouts 5d of the support columns 5 and into the cutouts 9d of the supplementary columns 9, located respectively on the lines connecting the top wall (5f, 9f) of the respective column with its front wall 5b, 9b. The front walls 5b, 9b of the support columns 5 and the supplementary columns 9 define the internal space 14 of the housing 10.

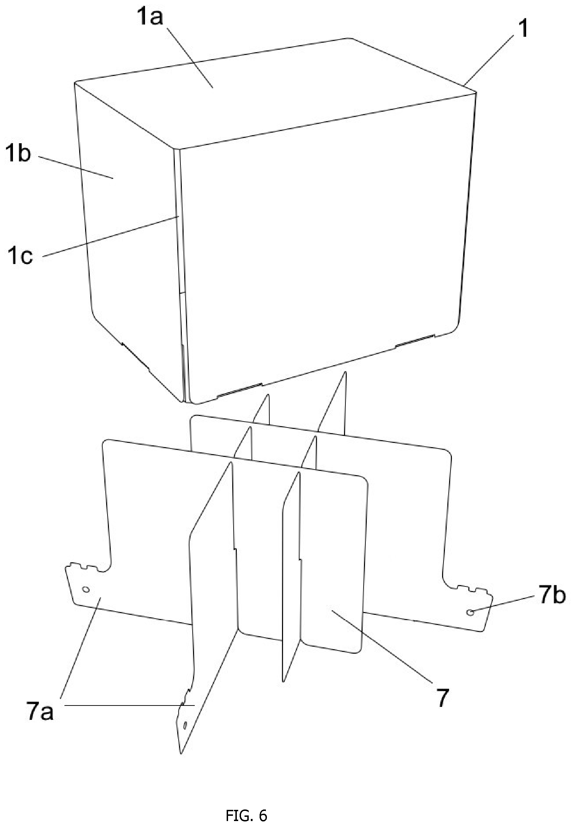

A cuboid shelf 1 of the stand is shown in Fig. 6-8. Shelf 1 comprises a top wall 1a, four side walls 1b, and a bottom (not shown). The vertical edges of the side walls 1b of shelf 1 are cut to form slots 1c.

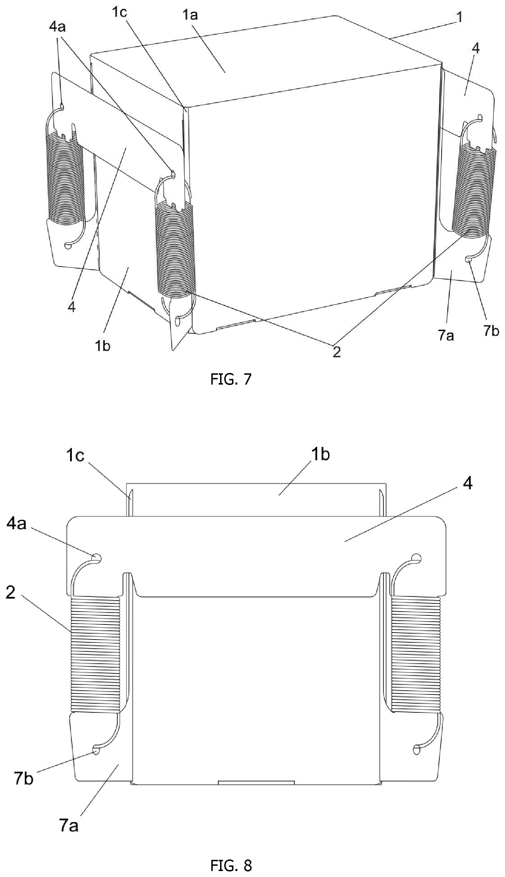

Shelf 1 contains a reinforcing element 7, which has four brackets 7a at its bottom, each with a single hole 7b. As shown in Fig. 7, when the reinforcing element 7 is placed inside shelf 1, the brackets 7a protrude from shelf 1 through slots 1c.

Figs. 7 and 8 show the assembly of shelf 1, springs 2, and support bars 4. As shown, springs 2 extend through slots 1c of shelf 1. The first ends of each spring are engaged in the opening 7b of the brackets 7a of the reinforcing element, while the second ends of the springs are engaged in the openings 4a of the support bars 4, such that the support bars 4 are positioned opposite each other on both sides of the shelf 1.

Fig. 9 shows the arrangement of support columns 5 and supplementary columns 9 with the stand housing 10 (not shown in this figure). This figure shows the rear walls 5c and 9c of the support columns 5 and supplementary columns 9, which abut the stand housing 10. Additionally, the corner spaces 12 formed between the side walls of the aforementioned columns are visible.

Fig. 10 is a top view cross-section of the stand according to the invention. This figure shows the housing 10, support columns 5, supplementary columns 9, the internal space 14 of the housing, corner spaces 12 formed at the corners of the housing between the side walls of the support columns 5 and supplementary columns 9, and locking elements 3.

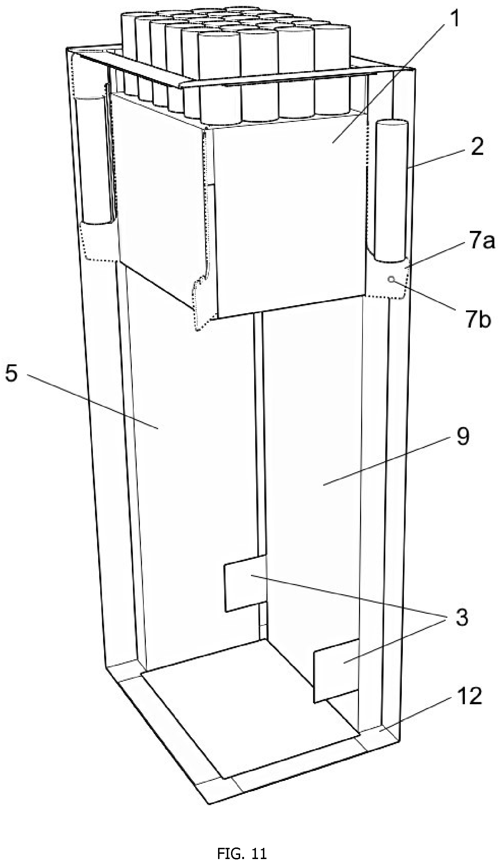

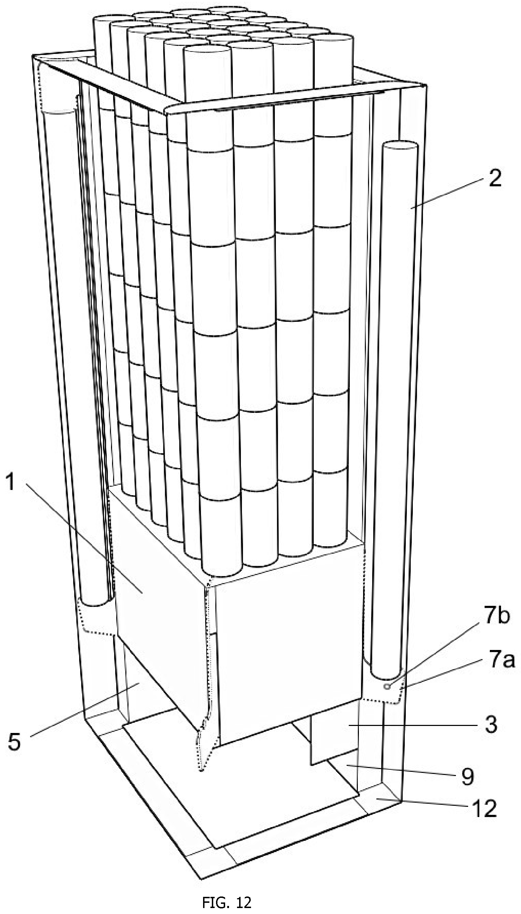

A display stand according to the example, partially loaded with products, is shown in Fig. 11, and a fully loaded display stand is shown in Fig. 12. In these figures, shelf 1 is positioned within the interior space 14 of housing 10 such that support bars (not shown) are located in the cutouts (not shown) of the opposite support columns 5, and the springs 2 together with the brackets 7a are positioned in the corner spaces 12 between adjacent support columns 5 and supplementary columns 9.

Figs. 11-12 illustrate the lowering level of shelf 1 and the extension level of tension springs 2 depending on the degree to which the display stand is loaded with products.

The degree of shelf 1 lowering and the tension spring 2 extension are set so that the top layer of products protrudes above the body 13.

Fig.11 shows the locking elements 3 against which the shelf 1, shown in Fig. 12, rests.

### Example 2

In Example 2, a display stand is made of solid cardboard. The stand structure is analogous to that described in Example 1, although due to the material, stabilizing elements 6 are not used.

### Example 3

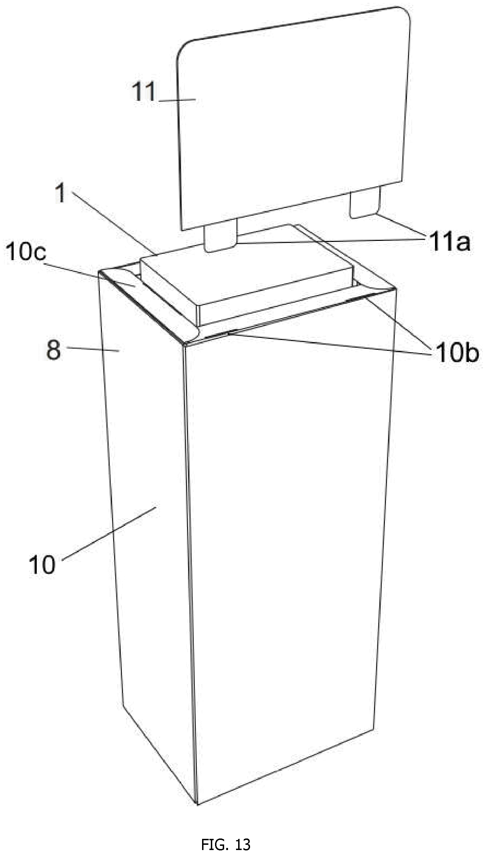

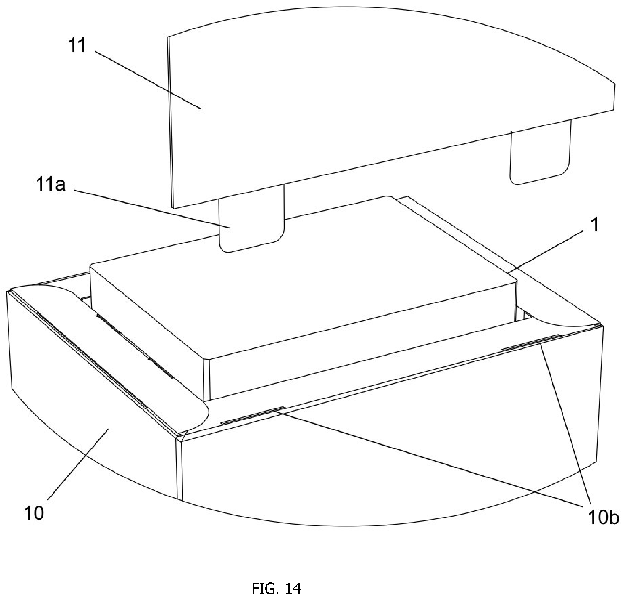

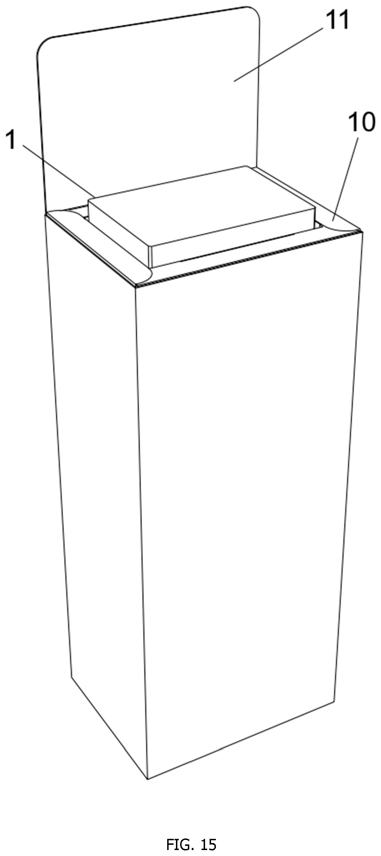

Example 3 relates to an embodiment of the display stand defined in Example 1, except that the housing 10 along one of the upper edges additionally includes two cutouts 10b, each of which receives the flaps 11a of the graphic panel 11, as shown in Figs. 13-15.

### Example 4

Example 4 relates to an embodiment of the display stand defined in Example 1, wherein the display stand additionally includes a paper sleeve 8 slipped over the outer surface of the stand housing 10, as shown in Fig. 1.

### List of reference numerals

- 1: shelf
- 1a: (shelf) top wall
- 1b: (shelf) side wall
- 1c: (shelf) slot
- 2: spring
- 3: locking element
- 4: support bar
- 4a: (support bar) hole
- 5: support column
- 5a: (support column) side wall
- 5b: (support column) front wall
- 5c: (support column) rear wall
- 5d: cutout
- 5e: vertical cutout
- 5f: load-bearing column top wall
- 6: stabilizing element
- 7: reinforcing element
- 7a: bracket
- 7b: (bracket) hole
- 8: sleeve
- 9: supplementary column
- 9a: (supplementary column) side wall
- 9b: (supplementary column) front wall
- 9c: (supplementary column) rear wall
- 9d: cutout
- 9f: (supplementary column) top wall
- 10: housing
- 10a: (housing) projection
- 10b: (housing) cutout
- 10c: (housing) tab
- 11: graphic panel
- 11a: (graphic panel) flaps
- 12: corner space
- 13: body
- 14: interior space

## Claims

1. A display stand for storing products arranged in a stack, comprising:
a) an elongated body (13) comprising a housing (10), and two support columns (5) located opposite each other inside it and attached thereto,
b) a shelf (1) comprising
• a reinforcing element (7) having four brackets (7a),
• at least four springs (2), the first ends of which are engaged on the brackets (7a) of the reinforcing element (7), and
c) two support bars (4), wherein the second ends of the springs (2) are engaged on the support bars (4),
**characterized in that**
the support columns (5) are cuboid in shape and comprise a front wall (5b), a rear wall (5c), a bottom wall, a top wall (5f), and two side walls (5a),
wherein each support column (5) comprises vertical cutouts (5e) located in the upper portion of the side walls (5a),
the stand further comprises two supplementary columns (9) having a cuboid shape and comprising a front wall (9b), a rear wall (9c), a bottom wall, a top wall (9f), and two side walls (9a),
wherein the supplementary columns (9) are located opposite each other inside the housing (10), perpendicular to the support columns (5), such that the side walls (9a) of the supplementary columns (9) are adjacent to the side walls (5a) of the support columns (5), forming corner spaces (12), wherein the supplementary columns (9) are attached to the housing (10),
wherein the front walls (5b, 9b) of the support columns (5) and the supplementary columns (9) define an interior space (14) of the housing (10),
the shelf (1) has a cuboid shape and comprises a top wall (1a) and four side walls (1b) and, optionally, a bottom, wherein the vertical edges formed by the side walls (1b) are at least partially cut out to form slots (1c),
the reinforcing element (7) is located inside the shelf (1) such that the brackets (7a) protrude beyond the shelf (1) through the slots (1c),
springs (2) are arranged along the vertical edges formed by the side walls (1b) of the shelf (1), where the first end of each spring is engaged on a bracket (7b),
support bars (4) are positioned in the cutouts (5e) of the opposite support columns (5),
the shelf (1) is located within the interior space (14) of the housing (10) in such a manner that the brackets (7a) and springs (2) are located, respectively, in the corner spaces (12) between adjacent support columns (5) and supplementary columns (9),
wherein all elements of the stand, except the springs (2), are made of cardboard material.

2. The display stand according to claim 1, **characterized in that** the cardboard material is selected from the group comprising cardboard, corrugated cardboard, high-grammage corrugated cardboard, solid cardboard, high-grammage solid cardboard, paper-based honeycomb board, a panel comprising two layers of cardboard joined by a paper core, and a material based on paper tubes or paper tubes, wherein preferably the material is recycled

3. The display stand according to any preceding claim 1-2, **characterized in that** the spring (2) is an adjustable-tension spring.

4. The display stand according to any preceding claim 1-3, **characterized in that** the spring (2) is selected from a group comprising a tension spring, a flat tension spring, and/or a flat tension spring, a flat ring spring, a flat coil spring, and/or a compression spring.

5. The display stand according to any preceding claim 1-4, **characterized in that** the spring (2) is a spring assembly comprising at least two springs.

6. The display stand according to any preceding claim 1-5, **characterized in that** at least one supplementary column (9) in the lower part comprises at least one locking element (3) extending into the interior space (14) of the housing (10).

7. The display stand according to any preceding claim 1-6, **characterized in that** the support columns (5) and/or supplementary columns (9) are attached to the housing (10) through a slide-in closure.

8. The display stand according to any preceding claim 1-7, **characterized in that** the support columns (5) and/or supplementary columns (9) are glued, screwed, or sewn to the housing (10) walls.

9. The display stand according to any preceding claim 1-8, **characterized in that** the brackets (7a) are positioned at the bottom of the reinforcing element (7).

10. The display stand according to any preceding claim 1-9, **characterized in that** the springs (2) are engaged at one end to holes (7b) made in the brackets (7a) and at the other end to holes (4a) made in the support bars (4).

11. The display stand according to any preceding claim 1-10, **characterized in that** the support column (5) comprises stabilizing elements (6) located below the cutouts (5e) in the side wall (5a) of the support columns (5), preferably directly below the cutouts (5e).

12. The display stand according to any preceding claim 1-11, **characterized in that** the stand additionally includes a replaceable sleeve (8) positioned on the outer surface of the housing (10).

13. The display stand according to any preceding claim 1-12, **characterized in that** the stand additionally includes a graphic panel (11) located in the upper part of the housing (10).

14. The display stand according to claim 13, **characterized in that** the graphic panel (11) is located in cutouts (10b) in the upper part of the housing (10).

15. The display stand according to any preceding claim 13-14, **characterized in that** notches, additional holes, screws, adhesive, or double-sided tape stabilize the graphic panel (11).
